(19) Europäisches Patentamt / European Patent Office / Office européen des brevets

(11) **EP 3 433 387 B1**

(12) **FASCICULE DE BREVET EUROPEEN**

(45) Date de publication et mention
de la délivrance du brevet:
**16.09.2020   Bulletin 2020/38**

(21) Numéro de dépôt: **17711001.2**

(22) Date de dépôt: **27.02.2017**

(51) Int Cl.:
**C21D 8/02** *(2006.01)*   **B21B 15/00** *(2006.01)*
**C21D 9/46** *(2006.01)*   **C21D 9/50** *(2006.01)*

(86) Numéro de dépôt international:
**PCT/IB2017/000176**

(87) Numéro de publication internationale:
**WO 2017/163115 (28.09.2017 Gazette 2017/39)**

(54) **PROCÉDÉ DE FABRICATION DE TÔLES D'ACIERS LAMINÉES À FROID ET SOUDÉES, ET TÔLES AINSI PRODUITES**

VERFAHREN ZUR HERSTELLUNG VON KALTGEWALZTEN, GESCHWEISSTEN STAHLBLECHEN UND SO HERGESTELLTE BLECHE

METHOD FOR MANUFACTURING COLD-ROLLED, WELDED STEEL SHEETS, AND SHEETS THUS PRODUCED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité:  **25.03.2016   PCT/IB2016/000378**

(43) Date de publication de la demande:
**30.01.2019   Bulletin 2019/05**

(73) Titulaire: **Arcelormittal**
**1160 Luxembourg (LU)**

(72) Inventeurs:
• **DECHASSEY, Emmanuel**
**46110 Godella (ES)**
• **SILVY LELIGOIS, Christophe**
**46110 Godella (Valencia) (ES)**
• **CHICHARRO HERRANZ, Francisco**
**46520 Puerto de Sagunto (Valencia) (ES)**
• **POLO MESTRE, Vicente**
**46018 Valencia (ES)**
• **THEYSSIER, Marie-Christine**
**57000 Metz (FR)**
• **CELOTTO, Thierry**
**54190 Villerupt (FR)**
• **KACZYNSKI, Christine**
**57280 Maizières-les-Metz (FI)**
• **DUPUIS, Thomas**
**57050 Le Ban Saint Martin (FR)**
• **NGO, Quang-Tien**
**2125 Luxembourg (LU)**

(74) Mandataire: **Lavoix**
**2, place d'Estienne d'Orves**
**75441 Paris Cedex 09 (FR)**

(56) Documents cités:
**FR-A- 1 309 245     GB-A- 1 313 577**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne la fabrication de tôles ou de bandes laminées à froid d'aciers de fine épaisseur présentant une haute résistance et une aptitude à la déformation pour la fabrication de pièces par mise en forme, en particulier dans l'industrie automobile.

Parmi les familles d'aciers à haute résistance utilisées dans la construction automobile, on trouve notamment des aciers dits « dual-phase », des aciers à haute formabilité (ou « HF »), des aciers martensitiques, ainsi que des aciers destinés à être durcis sous presse.

Mais la fabrication de ces tôles en fine épaisseur est confrontée au problème suivant : ces tôles ou ces bandes sont fabriquées sur trains de laminage continus de la manière qui suit :

- des demi-produits, brames ou lingots, sont laminés à chaud puis bobinés.
- après débobinage, les tôles laminées à chaud sont soudées, de façon à assurer la continuité des étapes suivantes du procédé, c'est-à-dire que l'extrémité d'une tôle est soudée au début de la tôle suivante. Ce soudage est généralement réalisé par étincelage ou par Laser.
- les tôles ou bandes sont décapées par passage dans un bain approprié, puis bobinées. Elles sont ensuite laminées sur un laminoir à froid puis rebobinées. Elles sont enfin recuites en continu et éventuellement revêtues. Par exemple, une tôle laminée à chaud d'une épaisseur $e_i$=3mm peut être laminée à froid jusqu'à une épaisseur $e_{f=}$ 1mm, par passage successif au sein de cages de laminage, pour obtenir une tôle laminée à froid.
  La déformation totale, ou réduction subie par la tôle au cours de ce laminage à froid, peut être calculée par :

$$Ln(\frac{\text{épaisseur initiale ei}}{\text{épaisseur finale ef}}) \, ,$$ soit dans le cas mentionné ici: Ln(3)~ 1,10.

- la tôle laminée à froid subit ensuite un traitement au sein d'un four de recuit continu.

Dans ce procédé conventionnel, la soudure est laminée à froid en une seule étape par passage dans l'ensemble des cages du train de laminage à froid, et subit une déformation qui peut être importante, d'autant plus élevée que l'épaisseur initiale $e_i$ est forte et que celle de la tôle $e_f$ est faible.

Or par nature, la soudure est une zone où se concentrent différentes singularités :

- Une singularité géométrique, puisque le soudage conduit à une variation locale d'épaisseur dans le joint soudé. Même si des procédés de raclage peuvent être mis en œuvre de façon à ôter une grande partie de la surépaisseur, il est difficile d'éviter qu'une variation géométrique locale (sur ou sous-épaisseur) ne soit présente au niveau du joint soudé.
- Une singularité métallurgique, puisque la microstructure issue du chauffage et du refroidissement rapide est différente de la microstructure issue du laminage à chaud. De plus, la teneur en inclusions et en précipités est différente dans la soudure et dans la tôle de base avoisinante. Dans le cas du soudage par étincelage, on note également la présence de lignes de fibrage non parallèles à la surface de la tôle, résultant de l'étape de forgeage après l'étape d'étincelage.
- Une singularité mécanique, puisque le comportement mécanique du joint soudé en traction et en pliage, et sa ténacité, diffèrent du comportement mécanique de la tôle de base avoisinante.

Ces singularités expliquent que les joints soudés soient le lieu de concentration de déformations lors du laminage à froid. Dans certains cas, ces concentrations peuvent aller jusqu'à l'amorçage et à la propagation de défauts pouvant entraîner la rupture de la bande, ce qui interrompt naturellement la production et diminue la productivité des lignes industrielles. On recherche donc un procédé permettant d'accroître l'efficacité des installations industrielles dans la fabrication de nuances pour construction automobile, et notamment les familles d'aciers suivantes :

- les aciers dual-phase, dont la structure comprend de la martensite, éventuellement de la bainite, et de la ferrite, qui allient une résistance élevée à des possibilités importantes de déformation. Soumis à une déformation, leur capacité de consolidation est très grande, ce qui permet une bonne répartition des déformations dans le cas d'une collision et l'obtention d'une limite d'élasticité nettement plus importante sur pièce après formage. Ces aciers trouvent notamment des applications pour des pièces de structures et de sécurité pour les véhicules automobile, telles que les traverses, longerons, pièces de renfort, ou encore les voiles de roues. L'épaisseur de ces tôles laminées à froid se situe typiquement entre 0,5 et 3 mm. Les exigences d'allègement et de réduction de la consommation d'énergie conduisent à une demande accrue d'aciers dual-phase à haute résistance, c'est à dire dont la résistance mécanique est comprise entre 600 et 1180MPa. Selon la résistance mécanique $R_m$ en traction, qui peut aller par exemple de 600 à 1180 MPa, la composition de ces aciers comprend, les teneurs étant exprimées en poids, 0,05% $\leq$ C $\leq$ 0,17%, % 1,1$\leq$Mn $\leq$2,76%, 0,07% $\leq$ Si$\leq$ 0,7%%, S$\leq$0,008%, P $\leq$0,030%, 0,015%$\leq$Al $\leq$0,61%, Mo $\leq$0,13%, Cr$\leq$0,55%, Cu<0,2%, Ni$\leq$ 0,2%, Nb $\leq$0,050%, Ti$\leq$0,045%, V $\leq$0,010%, B $\leq$0,005%, Ca<0,030%, N$\leq$0,007%, le reste étant du fer et des impuretés inévitables provenant de l'élaboration.

- Les aciers à haute formabilité, qui contiennent des éléments tels que le silicium et/ou l'aluminium pour stabiliser à température ambiante de l'austénite en quantité significative, susceptible de se transformer progressivement en martensite lors d'opérations d'emboutissage à froid ou de sollicitations, obtenant par là-même une consolidation importante. On trouve notamment parmi ces aciers à haute formabilité, des aciers dits « CFB « (Carbide Free Bainite, ou bainite sans carbures) et des aciers dits « Q-P » obtenus par une étape de trempe (« Quenching ») et une étape de partition (« Partitioning ») du carbone. Selon la résistance mécanique visée, qui peut aller par exemple de 690 à 1180 MPa, la composition de ces aciers comprend, les teneurs étant exprimées en poids, entre 0,13 et 0,3% de C, entre 1.8 et 3.5% de Mn, entre 0.1 et 2% de Si, entre 0.1 et 2% d'Al, la teneur en Si+Al étant comprise entre 1 et 2,5%, $\leq$0,010%N. A titre optionnel, ces aciers peuvent contenir en outre du Ni, du Cr et du Mo de telle sorte que Ni+Cr+Mo<1%, et des éléments de microalliage Ti, Nb, V, chacun en quantité <0,1%, le reste étant du fer et des impuretés inévitables provenant de l'élaboration.

- les aciers martensitiques, qui acquièrent leur microstructure à l'issue du refroidissement suivant le recuit continu. Dans le cadre de l'application de ces aciers à la construction automobile, la gamme d'épaisseur utilisée pour des tôles martensitiques de résistance mécanique comprise entre 1200 et 1700 MPa dans le domaine de la construction automobile, est comprise couramment entre 0,6 et 2mm. La composition de ces aciers comprend notamment, les teneurs étant exprimées en poids : entre 0,10 et 0,30% de C, entre 0,40 et 2,20% de Mn, entre 0,18 et 0,30%Si, entre 0,010 et 0,050%Al, entre 0,0025 et 0,005%B. A titre optionnel, ces aciers peuvent également contenir entre 0,020 et 0,035%Ti, jusqu'à 0,10%Cu ou de Ni, et jusqu'à 0,21%Cr, le reste étant du fer et des impuretés inévitables provenant de l'élaboration.

- les aciers destinés au durcissement sous presse, qui sont des aciers qui acquièrent leur microstructure finale sur pièces grâce à un chauffage dans le domaine intercritique ou austénitique, suivi d'une déformation à chaud et d'un refroidissement rapide dans l'outillage d'une presse, ce qui provoque une transformation martensitique et/ou bainitique. La gamme typique d'épaisseur de ces tôles laminées à froid va de 0,6 à 3 mm. Selon la résistance mécanique en traction finale visée, qui peut aller par exemple de 1000 à 2000 MPa, la composition de ces aciers comprend, les teneurs étant exprimées en poids, entre 0,15% et 0,5% de C entre 0,4% et 3% de Mn, entre 0.1 et 1% de Si, $\leq$ 1% Cr, Ti $\leq$ 0.2%, Al $\leq$ 0.1%, B $\leq$ 0.010%, N<0,010%, optionnellement entre 0.25% et 2%, Nb $\leq$ 0.060%, le reste étant du fer et des impuretés inévitables provenant de l'élaboration.

On recherche donc un procédé qui permettrait d'éviter la concentration de déformations dans les joints soudés réalisés avant le laminage à froid et ainsi de minimiser le risque de rupture lors du laminage.

L'invention vise à mettre à disposition un tel procédé applicable à la fabrication de tôles laminées à froid d'aciers Dual Phase, en particulier de résistance mécanique supérieure à 600 MPa, d'aciers à haute formabilité de résistance mécanique supérieure à 690 MPa, d'aciers martensitiques de résistance mécanique supérieure à 1200 MPa, et d'aciers pour emboutissage à chaud.

Il existe également un besoin de disposer de tôles minces dans une gamme d'épaisseur plus faible que celle qui est accessible grâce à un laminage à froid effectué par passage dans un train de laminage donné, dont l'effort maximal de laminage est limité par définition par la conception mécanique des cages du train considéré. De plus, le couple de laminage est limité par le couple des moteurs et les rapports de réduction.

L'invention vise donc à mettre à disposition un procédé de fabrication économique, qui évite des modifications coûteuses d'installation de laminage existantes, et qui permet en particulier la fabrication de tôles minces à haute résistance de faible épaisseur, difficiles à laminer à froid.

De la sorte, l'invention vise également à mettre à disposition des tôles laminées à froid dans une gamme plus étendue d'épaisseurs par rapport aux capacités de laminage des installations existantes.

A cet effet, l'invention a pour objet un procédé de fabrication d'une tôle d'acier laminée à froid d'épaisseur $e_f$ comprise entre 0,5 et 3mm, comprenant les étapes successives et dans cet ordre selon lesquelles on approvisionne au moins deux tôles laminées à chaud d'épaisseur $e_i$, puis on les soude bout à bout de façon à créer un joint soudé (S1) de direction perpendiculaire à la direction de laminage à chaud, puis on décape par passage en continu dans un bain ces au moins deux tôles laminées à chaud ; puis on lamine à froid, dans une étape (L1) l'ensemble des au moins deux tôles laminées à chaud et soudées jusqu'à une épaisseur intermédiaire $e_{int}$, la direction de laminage à froid ($DL_1$) coïncidant avec la direction de laminage à chaud, le laminage à froid étant effectué avec un taux de réduction

$$0,35 \leq \frac{Ln(\frac{ei}{e\,\mathrm{int}})}{Ln(\frac{ei}{ef})} \leq 0,65,$$

$\varepsilon_1 = Ln(\frac{e_i}{e_{\mathrm{int}}})$ tel que : puis on ôte le joint soudé (S1) de façon à obtenir au moins deux tôles laminées à froid de façon intermédiaire puis on soude bout à bout ces au moins deux tôles laminées à froid de façon intermédiaire de façon à créer un joint soudé (S2) dont la direction est perpendiculaire à la direction de laminage à chaud, puis on lamine à froid, dans une étape (L2), l'ensemble des au moins deux tôles laminées à froid de façon intermédiaire et soudées, jusqu'à l'épaisseur finale $e_f$, la direction ($DL_2$) de l'étape de laminage à froid (L2) coïncidant avec la direction de laminage ($DL_1$).

Le taux de réduction $\varepsilon_1$ est préférentiellement tel que : $0,4 \leq \varepsilon_1 \leq 0,8$.

Selon un mode préféré, la composition de l'acier est celle d'un acier du type Dual Phase de résistance mécanique Rm supérieure à 600 MPa.

A titre préférentiel, la composition de l'acier comprend, les teneurs étant exprimées en poids : 0,05% $\leq$C $\leq$ 0,17%, 1,1% $\leq$Mn $\leq$2,76%, 0,07% $\leq$ Si$\leq$ 0,7%%, S$\leq$0,008%, P $\leq$0,030%, 0,015%$\leq$ Al $\leq$0,61%, Mo $\leq$0,13%, Cr$\leq$0,55%, Cu<0,2%, Ni$\leq$ 0,2%, Nb $\leq$0,050%, Ti$\leq$0,045%, V $\leq$0,010%, B $\leq$0,005%, Ca<0,030%, N$\leq$0,007%, le reste de la composition étant constitué de fer et d'impuretés inévitables résultant de l'élaboration.

Selon un autre mode préféré, la composition de l'acier est celle d'un acier à haute formabilité, de résistance mécanique Rm supérieure à 690 MPa.

A titre préférentiel, la composition de l'acier comprend, les teneurs étant exprimées en poids : 0,13% $\leq$C$\leq$ 0,3%, 1,8% $\leq$Mn $\leq$ 3.5%, 0.1% $\leq$S$\leq$ 2%, 0,1% $\leq$ Al $\leq$2%, étant entendu que 1% $\leq$ Si+Al$\leq$ 2,5%, $\leq$0,010%N, et optionnellement Ni, Cr et Mo étant entendu que Ni+Cr+Mo<1%, Ti$\leq$0,1%, Nb$\leq$0,1%, V$\leq$0,1%, le reste étant du fer et des impuretés inévitables provenant de l'élaboration.

Selon un autre mode préféré, la composition de l'acier est celle d'un acier pour durcissement sous presse pour la fabrication de pièces de résistance mécanique Rm supérieure à 1000 MPa.

A titre préférentiel, la composition de l'acier comprend, les teneurs étant exprimées en poids : 0,15% $\leq$C$\leq$ 0,5%C, 0,4% $\leq$Mn$\leq$ 3%, 0,1$\leq$Si$\leq$ 1%, Cr$\leq$ 1%, Ti $\leq$ 0,2%, Al $\leq$ 0,1%, B $\leq$ 0.010%, et optionnellement 0.25%$\leq$ Nb$\leq$ 2%, Nb $\leq$ 0.060%, le reste étant du fer et des impuretés inévitables provenant de l'élaboration.

Selon un autre mode préféré, la composition de l'acier est celle d'un acier martensitique de résistance mécanique Rm comprise entre 1200 et 1700 MPa.

A titre préférentiel, la composition de l'acier comprend, les teneurs étant exprimées en poids : 0,10 %$\leq$ C $\leq$ 0,30%, 0,40% $\leq$ Mn $\leq$ 2,20%, 0,18% $\leq$Si $\leq$ 0,30%, 0,010%$\leq$Al $\leq$ 0,050%Al, 0,0025 $\leq$ B $\leq$ 0,005% et à titre optionnel 0,020% $\leq$Ti $\leq$ 0,035%, Cu $\leq$ 0,10%, Ni $\leq$ 0,10%, Cr $\leq$ 0,21%, le reste étant du fer et des impuretés inévitables provenant de l'élaboration.

Selon un mode préféré, après que l'on a ôté le joint soudé (S1), et avant que l'on crée le joint soudé (S2), on bobine, on stocke de façon temporaire, puis on débobine lesdites au moins deux tôles laminées à froid de façon intermédiaire.

Selon un mode particulier, le joint soudé (S1) ou le joint soudé (S2) est réalisé par soudage par étincelage.

Selon un autre mode particulier, le joint soudé (S1) ou le joint soudé (S2) est réalisé par Laser.

L'invention a également pour objet une tôle d'acier soudée puis laminée à froid d'épaisseur comprise entre 0,5 et 3mm, dont le taux de déformation créé par le laminage à froid dans le métal de base est égal à $\varepsilon_{MB}$, dont le taux de déformation créé par le laminage à froid dans le joint soudé est égal à $\varepsilon_S$, caractérisé en ce que :

$$0,4 \leq \frac{\varepsilon S}{\varepsilon MB} : \leq 0,7$$

et en ce que la direction générale du joint soudé s'étend perpendiculairement à la direction du laminage.

Selon un mode préféré, la composition de la tôle d'acier soudée puis laminée à froid est celle d'un acier du type Dual Phase de résistance mécanique Rm supérieure à 600 MPa.

A titre préférentiel, la composition de l'acier comprend, les teneurs étant exprimées en poids :0,05% $\leq$C $\leq$ 0,17%, 1,1% $\leq$Mn $\leq$2,76%, 0,07% $\leq$ Si$\leq$ 0,7%%, S$\leq$0,008%, P $\leq$0,030%, 0,015%$\leq$ Al $\leq$0,61%, Mo $\leq$0,13%, Cr$\leq$0,55%, Cu<0,2%, Ni$\leq$ 0,2%, Nb $\leq$0,050%, Ti$\leq$0,045%, V $\leq$0,010%, B $\leq$0,005%, Ca<0,030%, N$\leq$0,007%,le reste de la composition étant constitué de fer et d'impuretés inévitables résultant de l'élaboration.

Selon un autre mode préféré, la composition de la tôle d'acier soudée puis laminée à froid est celle d'un acier à haute formabilité, de résistance mécanique Rm supérieure à 690 MPa.

A titre préférentiel, la composition de l'acier comprend, les teneurs étant exprimées en poids : 0,13% $\leq$C$\leq$ 0,3% , 1,8% $\leq$Mn $\leq$ 3.5%, 0.1% $\leq$Si$\leq$ 2% 0,1% $\leq$ Al $\leq$2%, étant entendu que 1%$\leq$ Si+Al$\leq$ 2,5%, $\leq$0,010%N, et optionnellement Ni, Cr et Mo étant entendu que Ni+Cr+Mo<1%, Ti≤0,1%, Nb≤0,1%, V≤0,1%, le reste étant du fer et des impuretés inévitables provenant de l'élaboration.

Selon un autre mode préféré, la composition de la tôle d'acier soudée puis laminée à froid est celle d'un acier pour durcissement sous presse pour la fabrication de pièces de résistance mécanique Rm supérieure à 1000 MPa.

A titre préférentiel, la composition de l'acier comprend, les teneurs étant exprimées en poids: 0,15% ≤C≤ 0,5%C, 0,4% ≤Mn≤ 3%, 0,1≤Si≤ 1%, Cr≤ 1%, Ti ≤ 0,2%, Al ≤ 0,1%, B ≤ 0.010%, et optionnellement 0.25%≤ Nb≤ 2%, Nb ≤ 0.060%, le reste étant du fer et des impuretés inévitables provenant de l'élaboration.

Selon un autre mode préféré, la composition de la tôle d'acier soudée puis laminée à froid est celle d'un acier martensitique, de résistance mécanique Rm comprise entre 1200 et 1700 MPa.

A titre préférentiel, la composition de l'acier comprend, les teneurs étant exprimées en poids : 0,10 %≤ C ≤ 0,30%, 0,40% ≤ Mn ≤ 2,20%, 0,18% ≤Si ≤ 0,30%, 0,010%≤Al ≤ 0,050%Al, 0,0025 ≤ B ≤ 0,005%,.et à titre optionnel 0,020% ≤Ti ≤ 0,035%, Cu ≤ 0,10%, Ni ≤ 0,10%, Cr ≤ 0,21%, le reste étant du fer et des impuretés inévitables provenant de l'élaboration.

Selon un mode particulier, le joint soudé est une soudure par étincelage. Selon un autre mode particulier, le joint soudé est une soudure Laser.

La mise en œuvre du procédé de fabrication d'une tôle laminée selon l'invention est la suivante :

- On approvisionne au moins deux tôles d'acier laminées à chaud, obtenues par des procédés connus en eux-mêmes, d'épaisseur initiale $e_i$ typiquement comprise entre 2 et 8 mm. Ces tôles, encore appelées bandes, sont obtenues à partir de brames coulées en continu ou de lingots qui sont ensuite laminés sur des trains de laminage constitués de différentes cages de laminoir dans lesquelles les tôles passent successivement. Leur longueur peut être comprise entre 500 et 2000m. Ces tôles laminées à chaud sont bobinées dans un domaine de température propre à conférer une microstructure et un état de précipitation adapté au laminage à froid et au recuit ultérieur. A titre optionnel, en vue de diminuer la dureté des tôles pour faciliter le laminage à froid qui va suivre, un traitement thermique à une température $T_R$ comprise entre 400 et 700°C peut être effectué en plaçant les bobines dans un four de recuit base, le maintien à la température $T_R$ étant compris entre 5 minutes et 24h. Les tôles sont ensuite débobinées puis, pour rendre le procédé ultérieur continu, soudées bout à bout, c'est-à-dire raboutées entre elles de façon à former des bandes de longueur plus importante. A titre préférentiel, ce soudage est réalisé par étincelage ou par soudage Laser. Les conditions de soudage spécifiques à ces procédés sont alors adaptées pour obtenir des joints soudés de qualité satisfaisante, ce qui se traduit par une minimisation de défauts géométriques souvent causés par un mauvais alignement relatif des tôles avant soudage, une minimisation des inclusions allongées et de la différence de dureté entre le joint soudé et la dureté du métal de base, ainsi qu'une minimisation d'une éventuelle zone adoucie dans la Zone Affectée par la Chaleur (ZAC) de part et d'autre du plan de joint. Les joints soudés ainsi créés à ce stade, que l'on désignera sous le nom générique de (S1), ont une direction générale perpendiculaire à la direction de laminage à chaud, et s'étendent sur toute la largeur des tôles ou des bandes. Ces tôles ou ces bandes sont décapées par passage dans un bain d'acide pour éliminer la calamine qui a été formée à la surface de la tôle lors des étapes précédentes.
- lors d'une première étape désignée par (L1), on procède ensuite au laminage à froid des tôles dans le sens de leur longueur de la façon suivante : grâce à un premier passage dans un train de laminage à froid, constitué de plusieurs cages, on confère aux tôles un taux de déformation de façon à les amener à une épaisseur intermédiaire $e_{int}$. Contrairement à l'art antérieur, on n'effectue donc pas le laminage jusqu'à l'épaisseur finale du produit, mais jusqu'à une épaisseur intermédiaire. La direction de laminage à froid est notée (DL1). Après ce premier passage dans la totalité des cages du train de laminage à froid, la déformation $\varepsilon_1$ conférée par le laminage à la tôle est : $Ln(\dfrac{e_i}{e_{int}})$

Les inventeurs ont mis en évidence que le taux de déformation lors de cette première étape devait être effectuée en relation avec le taux de déformation total calculé à partir de l'épaisseur finale $e_f$ après la totalité des étapes de laminage à froid, de façon à ce que la relation suivante soit observée

$$0,35 \leq \frac{Ln(\dfrac{e_i}{e_{int}})}{Ln(\dfrac{e_i}{e_f})} \leq 0,65$$

En d'autres termes, la déformation appliquée lors de cette première étape de laminage doit être comprise entre 0,35 et 0,65 fois la déformation totale associée au procédé complet de laminage à froid :

- lorsque ce rapport est inférieur à 0,35, le laminage du produit lors de l'étape qui suit l'étape intermédiaire, sera effectué avec un taux de déformation plus important, ce qui accroît le risque de rupture prématurée du joint soudé dans la bande.
- lorsque ce rapport est supérieur à 0,65, le taux de laminage associé à la première étape conduit également à un accroissement du risque de rupture du joint soudé.

Après cette première étape de laminage, le joint soudé (S1) est éliminé par un moyen connu en lui-même, par exemple par cisaillage. On élimine de la sorte le joint soudé qui a été écroui par l'étape (L1) et qui pourrait être une origine potentielle de rupture ultérieure de la bande lors du laminage à froid ultérieur. Cette découpe crée de la sorte deux tôles laminées à froid de façon intermédiaire par l'étape (L1), d'épaisseur $e_{int}$.

Ces tôles sont ensuite bobinées et stockées de façon temporaire. Elles sont ensuite débobinées pour effectuer l'opération de raboutage des deux tôles. Cette seconde étape de soudage permet de créer un joint soudé (S2) dont la direction générale s'étend perpendiculairement à la direction de laminage à froid (DL1),sur toute la largeur des tôles.

Bien que cette opération se déroule dans des conditions qui semblent proches de celles du soudage (S1), on notera que les paramètres de soudage de (S2) sont en réalité différents de (S1) puisque ceux-ci sont adaptés à l'épaisseur $e_{int}$, inférieure à l'épaisseur $e_i$. En particulier, l'énergie de soudage de (S2) est plus faible, ce qui conduit à la réalisation de zones soudées de moindre largeur et à la formation éventuelle de zones adoucies en ZAC de largeur et d'amplitude plus réduites. On crée donc un joint soudé (S2) dont la résistance et la ténacité offrent une résistance accrue à la rupture lors de l'étape de laminage à froid (L2) qui va suivre. Ce laminage (L2) est effectué dans une direction (DL2) identique à la direction (DL1) jusqu'à une épaisseur finale $e_f$, avec un taux de déformation $\varepsilon_2$ conféré à la tôle égal à :

$$Ln(\frac{e_{int}}{e_f})$$

Les inventeurs ont également mis en évidence que la rugosité de surface des tôles obtenues selon le procédé conventionnel, par un passage au sein d'un ensemble de cages de laminage, et la rugosité obtenue selon l'invention, par deux passages au sein de cet ensemble de cages, étaient similaires. La mise en œuvre de l'invention permet donc d'obtenir des produits dont la réactivité de surface vis-à-vis du recuit ultérieur est peu modifiée, si bien que les réglages des fours de recuit peuvent être conservés.

La présente invention va être maintenant illustrée à partir des exemples suivants donnés à titre non limitatif.

Exemple 1:

On a élaboré un acier dont la composition permettant la fabrication d'une tôle d'acier du type Dual Phase figure au tableau ci-dessous, exprimée en pourcentage pondéral, le solde étant du fer et des impuretés inévitables provenant de l'élaboration. Cette composition permet la fabrication d'une tôle Dual Phase avec une résistance mécanique en traction Rm supérieure à 980MPa.

Tableau 1 Composition d'acier Dual Phase (% poids)

| C | Mn | Si | S | P | Al | Mo | Cr | Ni | Nb | Ti | B |
|---|---|---|---|---|---|---|---|---|---|---|---|
| 0,075 | 2,49 | 0,284 | 0,001 | 0,013 | 0,158 | 0,085 | 0,295 | 0,015 | 0,024 | 0,036 | 0,0023 |

Des tôles d'acier d'une largeur de 1500 mm ont été laminées à chaud, jusqu'à une épaisseur $e_i$ de 3mm. Afin de rendre le procédé continu, ces tôles ont été soudées par étincelage dans les conditions (S1) suivantes :

Distance d'étincelage : 9,5mm
Distance de forgeage : 2,5mm
Durée du cycle de soudage : 9s.

Ces tôles laminées à chaud soudées ont été ensuite laminées à froid jusqu'à une épaisseur de 1mm par deux procédés différents :

Procédé de référence R1 : les tôles ont été directement laminées à froid par un train continu constituées de cinq

$$Ln(\frac{3}{1}) \sim 1,10.$$

cages de laminage. La déformation conférée par le laminage à la tôle est :

Procédé selon l'invention I1 : les tôles ont été laminées à froid par un train continu constitué de cinq cages de laminage jusqu'à une épaisseur intermédiaire $e_{int}$ de 1,6mm. A ce stade, la déformation $\varepsilon_1$ est égale à :

$$Ln(\frac{3}{1,6}) \sim 0,63.$$

La soudure (S1) a été ôtée par cisaillage, les tôles ainsi obtenues ont été bobinées et stockées de façon intermédiaire. Celles-ci ont été ensuite débobinées puis soudées entre elles par étincelage pour créer un joint soudé (S2) dans les conditions suivantes :

Distance d'étincelage : 6,5mm
Distance de forgeage : 1,5mm
Durée du cycle de soudage : 7s.

Après élimination par usinage de la surépaisseur du joint (S2), cette tôle d'épaisseur 1,6mm a été ensuite laminée à froid jusqu'à une épaisseur finale $e_f$ de 1mm. Le taux de déformation conféré par cette seconde étape de laminage (L2) est égal à : $Ln(\frac{1,6}{1}) \sim 0,47.$ De la sorte le rapport $\dfrac{Ln(\frac{ei}{e\,int})}{Ln(\frac{ei}{ef})}$ est égal à :~0,57.

On a caractérisé les microstructures des joints soudés aux différentes étapes (initiale, épaisseurs intermédiaire et finale) ainsi que la variation de la microdureté Vickers dans le sens travers de ces joints, sous une charge de 500g. Grâce à ces caractérisations, il est possible de connaître la largeur initiale du joint soudé et la largeur du joint après laminage à froid, et donc d'en déduire le taux de déformation local du joint soudé conféré par le laminage à froid. Le tableau 2 présente l'écart $\Delta$ entre le taux de déformation global de la tôle déterminé à partir de sa variation d'épaisseur, avec le taux de déformation local du joint soudé S1 ou S2, selon le procédé de fabrication (moyenne de trois essais)

Tableau 2

|  | Ecart $\Delta$ de taux de déformation entre la tôle et le joint soudé |
| --- | --- |
| Procédé I1 | 0 |
| Procédé R1 | 0,07 |

Pour le procédé conventionnel, on montre ainsi que le joint soudé se déforme de 7% de moins que la tôle avoisinante. D'une manière surprenante, on met en évidence que le procédé de l'invention conduit à ce que le taux de déformation conféré par le laminage soit pratiquement identique dans la tôle et dans la bande, et donc de réduire le risque d'une rupture prématurée dans le joint soudé du fait que les déformations se concentrent plus particulièrement dans cette zone.

De plus, le tableau 3 compare la largeur des joints soudés (mesurées au niveau de la Zone Affectée par la Chaleur) et leur dureté $HV_{0,5}$ moyenne, mesurées sur la tôle d'épaisseur finale 1mm obtenue soit par le procédé de référence R1, soit par le procédé de l'invention I1. Pour comparaison, on a également porté la dureté de la tôle d'épaisseur 1mm, ainsi que l'écart relatif entre la dureté des joints soudés et celle de la tôle

La microstructure des joints (S1) et (S2) est très majoritairement martensitique avec une faible proportion de bainite.

Tableau 3

|  | Largeur du joint soudé laminé (mm) | Dureté du joint soudé laminé ($HV_{0,5}$) | Dureté de la tôle laminée ($HV_{0,5}$) | Ecart de dureté relatif/ joint soudé-tôle laminée |
| --- | --- | --- | --- | --- |
| Procédé I1 | 10,7 | 409 | 367 | 11,4% |
| Procédé R1 | 23 | 438 | 367 | 19,3% |

On met ainsi en évidence que le procédé de l'invention conduit à l'obtention d'une bande soudée dont le joint est plus étroit et dont la différence de dureté avec le métal de base est plus faible que dans le cas du procédé de référence, cette homogénéité contribuant à réduire le risque de rupture prématurée dans le joint soudé lors du laminage à froid.

Au moyen d'éprouvettes de traction de 70mm de long et de 5mm de large prélevées dans le sens parallèle aux joints soudés, on a mesuré la résistance Rm et l'allongement à rupture A dans les tôles laminées à froid d'épaisseur 1 mm fabriquées par le procédé de référence et le procédé selon l'invention. Les résultats relatifs aux joints soudés et à la tôle de base sont présentés au tableau 4.

Tableau 4

|  | Rm (MPa) | A (%) |
|---|---|---|
| Joint soudé laminé Procédé I1 | 1400 | 3,4 |
| Joint soudé laminé Procédé R1 | 1550 | 1 |
| Tôle laminée | 1390 | 3,7 |

On met là encore en évidence que le procédé selon l'invention permet d'obtenir une grande homogénéité de propriétés mécaniques entre la tôle de base et le joint soudé, ce qui permet de réduire le risque de rupture lors du laminage à froid de la bande. En effet, dans le procédé conventionnel R1, l'allongement à rupture du joint soudé est plus faible, ce qui signifie qu'une concentration locale de contraintes pourrait conduire plus facilement à une rupture. Dans le procédé de l'invention, la réserve de plasticité du joint soudé est plus importante et comparable à celle du métal de base, si bien que le risque de rupture est notablement diminué.

Par ailleurs, on a mesuré la rugosité superficielle des tôles fabriquées par les procédés conventionnel et de l'invention grâce une mesure de rugosité 3D. Les images 3D ont été traitées grâce au logiciel Mountains®. Les profils de rugosité sont analysés selon la norme ISO4287, les images selon la norme EN15178N. Les résultats figurent au tableau 5.

Tableau 5

|  | Ra ($\mu$m) |
|---|---|
| Tôle laminée Procédé I1 | 0,83 |
| Tôle laminée Procédé R1 | 0,88 |

On voit que l'invention permet de fabriquer des tôles dont la rugosité de surface Ra n'est pratiquement pas modifiée, c'est-à-dire que le passage à deux reprises dans la ligne de laminage n'a pas modifié la rugosité par rapport à un seul passage. Or on sait qu'une augmentation de la rugosité augmente l'émissivité lors du recuit en four qui intervient après le laminage à froid. Dans le cas par exemple d'un four de recuit avec chauffage par flamme directe qui conduit à une phase oxydante pour le fer, une tôle avec une rugosité accrue est chauffée plus rapidement, ce qui peut avoir des conséquences sur les cinétiques de recristallisation et de précipitation et donc sur les propriétés mécaniques finales de la tôle. Une modification de la rugosité peut donc conduire à changer les réglages de consigne des fours de recuit.

Or comme on a vu que la rugosité n'est pratiquement pas modifiée, pour une composition d'acier et une épaisseur données, des tôles laminées par un procédé conventionnel et des tôles laminées par le procédé de l'invention peuvent être passées successivement dans un four de recuit sans modifier les réglages, ce qui présente l'avantage de simplifier la gestion des fours de recuit.

Exemple 2

Un acier durcissable sous presse a été approvisionné dont la composition, exprimée en pourcentage pondéral, figure au tableau 5, le solde étant du fer et des impuretés inévitables provenant de l'élaboration.

Tableau 5

| C | Mn | Si | Al | Cr | Ti | B | N |
|---|---|---|---|---|---|---|---|
| 0,22 | 1,16 | 0,26 | 0,03 | 0,17 | 0,035 | 0,003 | 0,005 |

Des tôles d'acier ont été laminées à chaud jusqu'à une épaisseur $e_i$ de 3,5mm. Afin de rendre le procédé continu, ces tôles ont été soudées par étincelage dans les conditions (S1) suivantes :

Distance d'étincelage : 9,5mm
Distance de forgeage : 2,5mm
Durée du cycle de soudage : 12s.
Durée de recuit post-soudage : 9s

Les tôles ont été laminées à froid par un train continu constitué de cinq cages de laminage jusqu'à une épaisseur intermédiaire $e_{int}$=1,75mm. A ce stade, la déformation $\varepsilon_1$ est égale à : $Ln(\frac{3,5}{1,75}) \sim 0,69.$ La soudure (S1) a été ôtée par cisaillage, les tôles ainsi obtenues ont été bobinées et stockées de façon intermédiaire. Celles-ci ont été ensuite débobinées, puis soudées entre elles par étincelage pour créer un joint soudé (S2) dans les conditions suivantes :

Distance d'étincelage : 6,5mm
Distance de forgeage : 1,5mm
Durée du cycle de soudage : 7s.
Durée de recuit post-soudage : 7s.

Après élimination par usinage de la surépaisseur du joint (S2), cette tôle d'épaisseur 1,75mm a été ensuite laminée à froid jusqu'à une épaisseur finale $e_f$ de 0,64mm. Le taux de déformation conféré par cette seconde étape de laminage (L2) est égal à : $Ln(\frac{1,75}{0,64}) \sim 1.$ De la sorte le rapport $\dfrac{Ln(\frac{ei}{e\,int})}{Ln(\frac{ei}{ef})}$ est égal à : $\sim 0,41$.

Dans ces conditions, qui sont celles de l'invention, on constate que le procédé ne donne lieu à aucune rupture prématurée de bande au niveau du joint soudé et qu'il est possible de réaliser des tôles de fine épaisseur de cette nuance d'acier durcissable sous presse.

Le procédé selon l'invention sera utilisé avec profit pour réduire le risque de rupture de bandes lors de la fabrication de tôles laminées à froid d'aciers Dual Phase et TRIP, d'aciers à Haute Formabilité, d'aciers pour durcissement sous presse, laminées à froid pour l'industrie automobile. Il sera également utilisé avec profit pour la fabrication de tôles dans des gammes d'épaisseur plus fines que celles qui sont obtenues directement en une seule étape de laminage par les installations existantes.

**Revendications**

1. Procédé de fabrication d'une tôle d'acier laminée à froid d'épaisseur et comprise entre 0,5 et 3mm, comprenant les étapes successives et dans cet ordre selon lesquelles :

- on approvisionne au moins deux tôles laminées à chaud d'épaisseur $e_i$, puis
- on soude bout à bout lesdites au moins deux tôles laminées à chaud, de façon à créer un joint soudé (S1) de direction perpendiculaire à la direction de laminage à chaud, puis
- on décape par passage en continu dans un bain lesdites au moins deux tôles laminées à chaud ; puis
- on lamine à froid, dans une étape (L1), l'ensemble des au moins deux tôles laminées à chaud et soudées, jusqu'à une épaisseur intermédiaire $e_{int}$, la direction de laminage à froid (DL$_1$) coïncidant avec ladite direction de laminage à chaud, ledit laminage à froid étant effectué avec un taux de réduction $\varepsilon_1 = Ln(\frac{e_i}{e_{int}})$ tel que :

$$0,35 \le \frac{Ln(\frac{ei}{e\,int})}{Ln(\frac{ei}{ef})} \le 0,65,$$

- puis

- on ôte ledit joint soudé (S1) de façon à obtenir au moins deux tôles laminées à froid de façon intermédiaire, puis
- on soude bout à bout lesdites au moins deux tôles laminées à froid de façon intermédiaire, de façon à créer un joint soudé (S2) dont la direction est perpendiculaire à la direction de laminage à chaud, puis
- on lamine à froid, dans une étape (L2), l'ensemble des au moins deux tôles laminées à froid de façon intermédiaire et soudées, jusqu'à ladite épaisseur finale $e_f$, la direction ($DL_2$) de l'étape de laminage à froid (L2) coïncidant avec la direction de laminage ($DL_1$)

**2.** Procédé de fabrication selon la revendication 1, **caractérisé en ce que** :

$$0,4 \leq \varepsilon_{1=} Ln(\frac{e_i}{e_{int}}) \leq 0,8$$

**3.** Procédé de fabrication selon la revendication 1 ou 2, **caractérisé en ce que** la composition de l'acier est celle d'un acier du type Dual Phase de résistance mécanique Rm supérieure à 600 MPa.

**4.** Procédé de fabrication selon la revendication 3, **caractérisé en ce que** la composition de l'acier comprend, les teneurs étant exprimées en poids :

$0,05\% \leq C \leq 0,17\%$
$1,1\% \leq Mn \leq 2,76\%$
$0,07\% \leq Si \leq 0,7\%$
$S \leq 0,008\%$
$P \leq 0,030\%$
$0,015\% \leq Al \leq 0,61\%$
$Mo \leq 0,13\%$
$Cr \leq 0,55\%$
$Cu < 0,2\%$
$Ni \leq 0,2\%$
$Nb \leq 0,050\%$
$Ti \leq 0,045\%$
$V \leq 0,010\%$
$B \leq 0,005\%$
$Ca < 0,030\%$
$N \leq 0,007\%$,

le reste de la composition étant constitué de fer et d'impuretés inévitables résultant de l'élaboration.

**5.** Procédé de fabrication selon la revendication 1 ou 2, **caractérisé en ce que** la composition de l'acier est celle d'un acier à haute formabilité, de résistance mécanique Rm supérieure à 690 MPa.

**6.** Procédé de fabrication selon la revendication 5, **caractérisé en ce que** la composition de l'acier comprend, les teneurs étant exprimées en poids :

$0,13\% \leq C \leq 0,3\%$
$1,8\% \leq Mn \leq 3.5\%$
$0.1\% \leq S \leq 2\%$
$0,1\% \leq Al \leq 2\%$
étant entendu que $1\% \leq Si+Al \leq 2,5\%$,
$N \leq 0,010\%$,
et optionnellement Ni, Cr et Mo étant entendu que Ni+Cr+Mo<1%,
$Ti \leq 0,1\%$
$Nb \leq 0,1\%$
$V \leq 0,1\%$

le reste étant du fer et des impuretés inévitables provenant de l'élaboration.

**7.** Procédé de fabrication selon la revendication 1 ou 2, **caractérisé en ce que** l'acier est un acier pour durcissement sous presse pour la fabrication de pièces de résistance mécanique Rm supérieure à 1000 MPa.

**8.** Procédé de fabrication selon la revendication 7, **caractérisé en ce que** la composition de l'acier comprend, les teneurs étant exprimées en poids :

$0,15\% \leq C \leq 0,5\%$
$0,4\% \leq Mn \leq 3\%$
$0,1 \leq Si \leq 1\%$
$Cr \leq 1\%,$
$Ti \leq 0,2\%,$
$Al \leq 0,1\%,$
$B \leq 0.010\%,$
et optionnellement
$Nb \leq 0.060\%,$

le reste étant du fer et des impuretés inévitables provenant de l'élaboration.

**9.** Procédé de fabrication selon la revendication 1 ou 2, **caractérisé en ce que** la composition de l'acier est celle d'un acier martensitique, de résistance mécanique Rm comprise entre 1200 et 1700 MPa.

**10.** Procédé de fabrication selon la revendication 9, **caractérisé en ce que** la composition de l'acier comprend, les teneurs étant exprimées en poids :

$0,10\% \leq C \leq 0,30\%$
$0,40\% \leq Mn \leq 2,20\%$
$0,18\% \leq Si \leq 0,30\%$
$0,010\% \leq Al \leq 0,050\%$
$0,0025\% \leq B \leq 0,005\%$
et à titre optionnel
$0,020\% \leq Ti \leq 0,035\%$
$Cu \leq 0,10\%$
$Ni \leq 0,10\%$
$Cr \leq 0,21\%,$

le reste étant du fer et des impuretés inévitables provenant de l'élaboration.

**11.** Procédé de fabrication selon l'une quelconque des revendications 1 à 10, **caractérisé en ce qu'**après que l'on a ôté ledit joint soudé (S1), et avant que l'on crée ledit joint soudé (S2), on bobine, on stocke de façon temporaire, puis on débobine lesdites au moins deux tôles laminées à froid de façon intermédiaire.

**12.** Procédé de fabrication selon l'une quelconque des revendications 1 à 11, **caractérisé en ce qu'**au moins ledit joint soudé (S1) ou qu'au moins ledit joint soudé (S2) est réalisé par soudage par étincelage.

**13.** Procédé de fabrication selon l'une quelconque des revendications 1 à 11, **caractérisé en ce qu'**au moins ledit joint soudé (S1) ou qu'au moins ledit joint soudé (S2) est réalisé par Laser.

**14.** Tôle d'acier soudée puis laminée à froid d'épaisseur comprise entre 0,5 et 3mm, dont le taux de déformation créé par le laminage à froid dans le métal de base est égal à $\varepsilon_{MB}$, dont le taux de déformation créé par le laminage à froid dans le joint soudé est égal à $\varepsilon_S$, **caractérisé en ce que** :

$$0,4 \leq \frac{\varepsilon S}{\varepsilon MB} \leq 0,7$$

et **en ce que** la direction générale du joint soudé s'étend perpendiculairement à la direction du laminage

**15.** Tôle d'acier soudée puis laminée à froid selon la revendication 14, **caractérisée en ce que** la composition de l'acier est celle d'un acier du type Dual Phase de résistance mécanique Rm supérieure à 600 MPa.

**16.** Tôle d'acier soudée puis laminée à froid selon la revendication 15, **caractérisée en ce que** la composition de l'acier comprend, les teneurs étant exprimées en poids :

0,05% ≤C ≤ 0,17%
1,1% ≤Mn ≤2,76%
0,07% ≤ Si≤ 0,7%
S≤0,008%
P ≤0,030%
0,015%≤ Al ≤0,61 %
Mo ≤0,13%
Cr≤0,55%
Cu<0,2%
Ni≤0,2%
Nb ≤0,050%
Ti≤0,045%
V ≤0,010%
B ≤0,005%
Ca<0,030%
N≤0,007%,

le reste de la composition étant constitué de fer et d'impuretés inévitables résultant de l'élaboration.

**17.** Tôle d'acier soudée puis laminée à froid selon la revendication 14, **caractérisée en ce que** la composition de l'acier est celle d'un acier à haute formabilité, de résistance mécanique Rm supérieure à 690 MPa.

**18.** Tôle d'acier soudée puis laminée à froid selon la revendication 17, **caractérisé en ce que** la composition de l'acier comprend, les teneurs étant exprimées en poids :

0,13% ≤C≤ 0,3%
1,8% ≤Mn ≤ 3.5%
0.1% ≤Si≤ 2%
0,1% ≤ Al ≤2%
étant entendu que 1%≤ Si+Al≤ 2,5%,
N ≤0,010%,
et optionnellement Ni, Cr et Mo étant entendu que Ni+Cr+Mo<1%,
Ti≤0,1%
Nb≤0,1%
V≤0,1%

le reste étant du fer et des impuretés inévitables provenant de l'élaboration.

**19.** Tôle d'acier soudée puis laminée à froid selon la revendication 14, en ce que l'acier est un acier pour durcissement sous presse pour la fabrication de pièces de résistance mécanique Rm supérieure à 1000 MPa.

**20.** Tôle d'acier soudée puis laminée à froid selon la revendication 19, **caractérisée en ce que** la composition de l'acier comprend, les teneurs étant exprimées en poids :

0,15% ≤C≤ 0,5%
0,4% ≤Mn≤ 3%
0,1 ≤Si≤ 1%
Cr≤ 1%,
Ti ≤ 0,2%,
Al ≤ 0,1%,
B ≤ 0.010%,
et optionnellement
Nb ≤ 0.060%,

le reste étant du fer et des impuretés inévitables provenant de l'élaboration.

**21.** Tôle d'acier soudée puis laminée à froid selon la revendication 14, **caractérisée en ce que** la composition de l'acier est celle d'un acier martensitique, de résistance mécanique Rm comprise entre 1200 et 1700 MPa.

**22.** Tôle d'acier selon la revendication 21, **caractérisée en ce que** la composition de l'acier comprend, les teneurs étant exprimées en poids :

0,10 %$\leq$ C $\leq$ 0,30%
0,40% $\leq$ Mn $\leq$ 2,20%
0,18% $\leq$Si $\leq$ 0,30%
0,010%$\leq$Al $\leq$ 0,050%
0,0025% $\leq$ B $\leq$ 0,005%
.et à titre optionnel
0,020% $\leq$Ti $\leq$ 0,035%
Cu $\leq$ 0,10%
Ni $\leq$ 0,10%
Cr $\leq$ 0,21%,

le reste étant du fer et des impuretés inévitables provenant de l'élaboration.

**23.** Tôle d'acier selon l'une quelconque des revendications 14 à 22, **caractérisé en ce que** ledit joint soudé est une soudure par étincelage.

**24.** Tôle d'acier selon l'une quelconque des revendications 14 à 22, **caractérisée en ce que** ledit joint soudé est une soudure Laser.

**Patentansprüche**

**1.** Verfahren zur Herstellung eines kaltgewalzten Stahlblechs mit einer Dicke $e_f$ zwischen 0,5 und 3 mm, das die folgenden, in der angegebenen Reihenfolge aufeinanderfolgenden Schritte umfasst, nach denen:

- mindestens zwei warmgewalzte Bleche mit einer Dicke $e_i$ bereitgestellt werden, dann
- die mindestens zwei warmgewalzten Bleche stumpfgeschweißt werden, um eine Schweißverbindung (S1) in eine Richtung senkrecht zur Warmwalzrichtung zu erzeugen, dann
- die mindestens zwei warmgewalzten Bleche in einem Bad kontinuierlich geätzt werden; dann
- die Gesamtheit der mindestens zwei warmgewalzten und verschweißten Bleche in einem Schritt (L1) bis zu einer Zwischendicke $e_{int}$ kaltgewalzt wird, wobei die Kaltwalzrichtung ($DL_1$) mit der Warmwalzrichtung übereinstimmt, wobei das Kaltwalzen mit einer Reduktionsrate

$\varepsilon_1$ = Ln ($e_i/e_{int}$) durchgeführt wird, so dass:

- 0,35 $\leq$ Ln($e_i/e_{int}$)/Ln($e_i/e_f$) $\leq$ 0,65, dann
- die Schweißverbindung (S1) entfernt wird, derart dass mindestens zwei kaltgewalzte Bleche zwischenzeitlich erhalten werden, dann
- die zwischenzeitlich erhaltenen mindestens zwei kaltgewalzten Bleche stoßgeschweißt werden, um eine Schweißverbindung (S2) zu erzeugen, deren Richtung senkrecht zur Warmwalzrichtung ist, dann
- die Gesamtheit der zwischenzeitlich erhaltenen mindestens zwei kaltgewalzten und verschweißten Bleche in einem Schritt (L2) bis zu der Enddicke $e_f$ kaltgewalzt wird, wobei die Richtung ($DL_2$) des Kaltwalzens (L2) mit der Walzrichtung ($DL_1$) übereinstimmt.

**2.** Herstellungsverfahren nach Anspruch 1, **dadurch gekennzeichnet, dass**:

$$0,4 \leq \varepsilon_1 = Ln\ (e_i/e_{int}) \leq 0,8\ .$$

**3.** Herstellungsverfahren nach Anspruch 1 oder 2, **dadurch gekennzeichnet, dass** die Zusammensetzung des Stahls diejenige eines Dualphasenstahls mit mechanischer Festigkeit Rm größer als 600 MPa ist.

**4.** Herstellungsverfahren nach Anspruch 3, **dadurch gekennzeichnet, dass** die Zusammensetzung umfasst, wobei die Gehalte in Gewichtsprozenten ausgedrückt sind:

$0,05\ \% \leq C \leq 0,17\ \%$
$1,1\ \% \leq Mn \leq 2,76\ \%$
$0,07\ \% \leq Si \leq 0,7\ \%$
$S \leq 0,008\ \%$
$P \leq 0,030\ \%$
$0,015\ \% \leq Al \leq 0,61\ \%$
$Mo \leq 0,13\ \%$
$Cr \leq 0,55\ \%$
$Cu < 0,2\ \%$
$Ni \leq 0,2\%$
$Nb \leq 0,050\ \%$
$Ti \leq 0,045\ \%$
$V \leq 0,010\ \%$
$B \leq 0,005\ \%$
$Ca < 0,030\ \%$
$N \leq 0,007\ \%$

wobei der Rest der Zusammensetzung aus Eisen und von der Verarbeitung herrührenden unvermeidbaren Verunreinigungen besteht.

**5.** Herstellungsverfahren nach Anspruch 1 oder 2, **dadurch gekennzeichnet, dass** die Zusammensetzung des Stahls eine solche eines Stahls hoher Umformbarkeit mit mechanischer Festigkeit Rm größer als 690 MPa ist.

**6.** Herstellungsverfahren nach Anspruch 5, **dadurch gekennzeichnet, dass** die Zusammensetzung des Stahls umfasst, wobei die Gehalte in Gewichtsprozenten ausgedrückt sind:

$0,13\ \% \leq C \leq 0,3\ \%$
$1,8\ \% \leq Mn \leq 3,5\ \%$
$0,1\ \% \leq Si \leq 2\ \%$
$0,1\ \% \leq Al \leq 2\ \%$
im Fall, dass $1\ \% \leq Si+Al \leq 2,5\ \%$
$N \leq 0,010\ \%$
und optional Ni, Cr und Mo im Fall, dass $Ni+Cr+Mo < 1\%$
$Ti \leq 0,1\%$
$Nb \leq 0,1\ \%$
$V \leq 0,1\ \%$

wobei der Rest der Zusammensetzung Eisen und von der Verarbeitung herrührende unvermeidbare Verunreinigungen ist.

**7.** Herstellungsverfahren nach Anspruch 1 oder 2, **dadurch gekennzeichnet, dass** der Stahl ein Stahl zum Presshärten für die Herstellung von Teilen mit mechanischer Festigkeit Rm größer als 1000 MPa ist.

**8.** Herstellungsverfahren nach Anspruch 7, **dadurch gekennzeichnet, dass** die Zusammensetzung des Stahls umfasst, wobei die Gehalte in Gewichtsprozenten ausgedrückt sind:

$0,15\ \% \leq C \leq 0,5\ \%$
$0,4\ \% \leq Mn \leq 3\ \%$
$0,1\ \% \leq Si \leq 1\ \%$
$Cr \leq 1\ \%$
$Ti \leq 0,2\%$
$Al \leq 0,1\ \%$
$B \leq 0,010\ \%$
und optional
$Nb \leq 0,060\ \%$

wobei der Rest der Zusammensetzung Eisen und von der Verarbeitung herrührende unvermeidbare Verunreinigungen ist.

9. Herstellungsverfahren nach Anspruch 1 oder 2, **dadurch gekennzeichnet, dass** die Zusammensetzung des Stahls eine solche eines Martensitstahls mit einer mechanischen Festigkeit Rm zwischen 1200 und 1700 MPa ist.

10. Herstellungsverfahren nach Anspruch 7, **dadurch gekennzeichnet, dass** die Zusammensetzung des Stahls umfasst, wobei die Gehalte in Gewichtsprozenten ausgedrückt sind:

$0{,}10\ \% \le C \le 0{,}30\ \%$
$0{,}40\ \% \le Mn \le 2{,}20\ \%$
$0{,}18\ \% \le Si \le 0{,}30\ \%$
$0{,}010\ \% \le Al \le 0{,}050\ \%$
$0{,}0025\ \% \le B \le 0{,}005\ \%$
und optional
$0{,}020\ \% \le Ti \le 0{,}35\%$
$Cu \le 0{,}10\ \%$
$Ni \le 0{,}10\ \%$
$Cr \le 0{,}21\ \%$

wobei der Rest der Zusammensetzung Eisen und von der Verarbeitung herrührende unvermeidbare Verunreinigungen ist.

11. Herstellungsverfahren nach Anspruch 1 oder 2, **dadurch gekennzeichnet, dass** nachdem die Schweißverbindung (S1) entfernt wurde und bevor die Schweißverbindung (S2) erzeugt wird, die mindestens zwei zwischenzeitlich kaltgewalzten Bleche aufgewickelt, zeitweise gelagert, dann abgewickelt werden.

12. Herstellungsverfahren nach einem beliebigen der Ansprüche 1 bis 11, **dadurch gekennzeichnet, dass** mindestens die Schweißverbindung (S1) oder mindestens die Schweißverbindung (S2) durch Abbrennschweißen hergestellt wird.

13. Herstellungsverfahren nach einem beliebigen der Ansprüche 1 bis 11, **dadurch gekennzeichnet, dass** mindestens die Schweißverbindung (S1) oder mindestens die Schweißverbindung (S2) durch Laser hergestellt wird.

14. Stahlblech, das geschweißt und dann kaltgewalzt ist, mit einer Dicke zwischen 0, 5 und 3 mm, dessen durch das Kaltwalzen in dem Grundmetall erzeugter Umformungsgrad gleich $\varepsilon_{MB}$ ist und dessen durch das Kaltwalzen in der Schweißverbindung erzeugter Umformungsgrad gleich $\varepsilon_{S}$ ist, **dadurch gekennzeichnet, dass**: $0{,}4 \le \varepsilon_{S} / \varepsilon_{MB} \le 0{,}7$ und dass die allgemeine Richtung der Schweißverbindung sich senkrecht zur Walzrichtung erstreckt.

15. Stahlblech, das geschweißt und dann kaltgewalzt ist, nach Anspruch 14, **dadurch gekennzeichnet, dass** die Zusammensetzung des Stahls diejenige eines Dualphasenstahls mit mechanischer Festigkeit Rm größer als 600 MPa ist.

16. Stahlblech, das geschweißt und dann kaltgewalzt ist, nach Anspruch 15, **dadurch gekennzeichnet, dass** die Zusammensetzung des Stahls umfasst, wobei die Gehalte in Gewichtsprozenten ausgedrückt sind:

$0{,}05\ \% \le C \le 0{,}17\ \%$
$1{,}1\ \% \le Mn \le 2{,}76\ \%$
$0{,}07\ \% \le Si \le 0{,}7\ \%$
$S \le 0{,}008\ \%$
$P \le 0{,}030\ \%$
$0{,}015\ \% \le Al \le 0{,}61\ \%$
$Mo \le 0{,}13\ \%$
$Cr \le 0{,}55\ \%$
$Cu < 0{,}2\ \%$
$Ni \le 0{,}2\%$
$Nb \le 0{,}050\ \%$
$Ti \le 0{,}045\ \%$

V ≤ 0,010 %
B ≤ 0,005 %
Ca < 0,030 %
N ≤ 0,007 %

wobei der Rest der Zusammensetzung aus Eisen und von der Verarbeitung herrührenden unvermeidbaren Verunreinigungen besteht.

**17.** Stahlblech, das geschweißt und dann kaltgewalzt ist, nach Anspruch 14, **dadurch gekennzeichnet, dass** die Zusammensetzung des Stahls eine solche eines Stahls hoher Umformbarkeit mit mechanischer Festigkeit Rm größer als 690 MPa ist.

**18.** Stahlblech, das geschweißt und dann kaltgewalzt ist, nach Anspruch 17, **dadurch gekennzeichnet, dass** die Zusammensetzung des Stahls umfasst, wobei die Gehalte in Gewichtsprozenten ausgedrückt sind:

0,13 % ≤ C ≤ 0,3 %
1,8 % ≤ Mn ≤ 3,5 %
0,1 % ≤ Si ≤ 2 %
0,1 % ≤ Al ≤ 2 %
im Fall, dass 1 % ≤ Si+Al ≤ 2,5 %
N ≤ 0,010 %
und optional Ni, Cr und Mo im Fall, dass Ni+Cr+Mo < 1%
Ti ≤ 0,1 %
Nb ≤ 0,1 %
V ≤ 0,1 %

wobei der Rest der Zusammensetzung Eisen und von der Verarbeitung herrührende unvermeidbare Verunreinigungen ist.

**19.** Stahlblech, das geschweißt und dann kaltgewalzt ist, nach Anspruch 14, **dadurch gekennzeichnet, dass** der Stahl ein Stahl zum Presshärten für die Herstellung von Teilen mit mechanischer Festigkeit Rm größer als 1000 MPa ist.

**20.** Stahlblech, das geschweißt und dann kaltgewalzt ist, nach Anspruch 19, **dadurch gekennzeichnet, dass** die Zusammensetzung des Stahls umfasst, wobei die Gehalte in Gewichtsprozenten ausgedrückt sind:

0,15 % ≤ C ≤ 0,5 %
0,4 % ≤ Mn ≤ 3 %
0,1 % ≤ Si ≤ 1 %
Cr ≤ 1 %
Ti ≤ 0,2%
Al ≤ 0,1 %
B ≤ 0,010 %
und optional
Nb ≤ 0,060 %

wobei der Rest der Zusammensetzung Eisen und von der Verarbeitung herrührende unvermeidbare Verunreinigungen ist.

**21.** Stahlblech, das geschweißt und dann kaltgewalzt ist, nach Anspruch 14, **dadurch gekennzeichnet, dass** die Zusammensetzung des Stahls eine solche eines Martensitstahls mit einer mechanischen Festigkeit Rm zwischen 1200 und 1700 MPa ist.

**22.** Stahlblech, das geschweißt und dann kaltgewalzt ist, nach Anspruch 21, **dadurch gekennzeichnet, dass** die Zusammensetzung des Stahls umfasst, wobei die Gehalte in Gewichtsprozenten ausgedrückt sind:

0,10 % ≤ C ≤ 0,30 %
0,40 % ≤ Mn ≤ 2,20 %
0,18 % ≤ Si ≤ 0,30 %

0,010 % ≤ Al ≤ 0,050 %
0,0025 % ≤ B ≤ 0,005 %
und optional
0,020 % ≤ Ti ≤ 0,35%
Cu ≤ 0,10 %
Ni ≤ 0,10 %
Cr ≤ 0,21 %

wobei der Rest der Zusammensetzung Eisen und von der Verarbeitung herrührende unvermeidbare Verunreinigungen ist.

**23.** Stahlblech, das geschweißt und dann kaltgewalzt ist, nach einem beliebigen der Ansprüche 14 bis 22, **dadurch gekennzeichnet, dass** die Schweißverbindung eine Abbrennschweißung ist.

**24.** Stahlblech, das geschweißt und dann kaltgewalzt ist, nach einem beliebigen der Ansprüche 14 bis 22, **dadurch gekennzeichnet, dass** die Schweißverbindung eine Laserschweißung ist.


**Claims**

**1.** Method for manufacturing a cold-rolled steel sheet of thickness $e_f$ between 0.5 and 3 mm, comprising successive steps, in this order, in which:

- at least two hot-rolled sheets of thickness $e_i$ are provided, then
- said at least two hot-rolled sheets are welded end to end so as to create a welded joint (S1) in a direction perpendicular to the direction of hot-rolling, then
- said at least two hot-rolled sheets are pickled by being passed continuously through a bath, then
- in a step (L1), the assembly of the at least two hot-rolled and welded sheets is cold-rolled to an intermediate thickness $e_{int}$, the direction of cold-rolling (DL$_1$) coinciding with said direction of hot-rolling, said cold-rolling being carried out with a reduction rate $\varepsilon_1 = Ln\left(\dfrac{e_i}{e_{int}}\right)$ such that:

$$0.35 \le \frac{Ln\left(\frac{ei}{eint}\right)}{Ln\left(\frac{ei}{ef}\right)} \le 0.65,$$ then

- said welded joint (S1) is removed so as to obtain at least two intermediately cold-rolled sheets, then
- said at least two intermediately cold-rolled sheets are welded end to end so as to create a welded joint (S2) in a direction perpendicular to the direction of hot-rolling, then
- in a step (L2), the assembly of the at least two intermediately cold-rolled and welded sheets is cold-rolled to said final thickness $e_f$, the direction (DL$_2$) of the cold-rolling step (L2) coinciding with the direction of rolling (DL$_1$).

**2.** Manufacturing method according to claim 1, **characterised in that**:

$$0.4 \le \varepsilon_1 = Ln\left(\frac{e_i}{e_{int}}\right) \le 0.8.$$

**3.** Manufacturing method according to claim 1 or 2, **characterised in that** the composition of the steel is that of a steel of the dual-phase type of mechanical strength Rm greater than 600 MPa.

**4.** Manufacturing method according to claim 3, **characterised in that** the composition of the steel comprises. the contents being expressed by weight:

$$0.05\% \le C \le 0.17\%$$

1.1% ≤ Mn ≤ 2.76%

$0.07\% \leq Si \leq 0.7\%$
$S \leq 0.008\%$
$P \leq 0.030\%$
$0.015\% \leq Al \leq 0.61\%$
$Mo \leq 0.13\%$
$Cr \leq 0.55\%$
$Cu < 0.2\%$
$Ni \leq 0.2\%$
$Nb \leq 0.050\%$
$Ti \leq 0.045\%$
$V \leq 0.010\%$
$B \leq 0.005\%$
$Ca < 0.030\%$
$N \leq 0.007\%$,

the remainder of the composition being composed of iron and unavoidable impurities resulting from the production process.

5. Manufacturing method according to claim 1 or 2, **characterised in that** the composition of the steel is that of a steel with high formability, of mechanical strength Rm greater than 690 MPa.

6. Manufacturing method according to claim 5, **characterised in that** the composition of the steel comprises, the contents being expressed by weight:

$0.13\% \leq C \leq 0.3\%$
$1.8\% \leq Mn \leq 3.5\%$
$0.1\% \leq Si \leq 2\%$
$0.1\%::; Al \leq 2\%$
it being understood that $1\% \leq Si + Al \leq 2.5\%$
$N \leq 0.010\%$,
and optionally Ni, Cr and Mo, it being understood that Ni + Cr + Mo < 1%,
$Ti \leq 0.1\%$
$Nb \leq 0.1\%$
$V \leq 0.1\%$,

the remainder being iron and unavoidable impurities resulting from the production process.

7. Manufacturing method according to claim 1 or 2, **characterised in that** the steel is a steel for press-hardening for the manufacture of parts of mechanical strength Rm greater than 1000 MPa.

8. Manufacturing method according to claim 7, **characterised in that** the composition of the steel comprises, the contents being expressed by weight:

$0.15\% \leq C \leq 0.5\%$
$0.4\% \leq Mn \leq 3\%$
$0.1 \% \leq Si \leq 1\%$
$Cr \leq 1\%$
$Ti \leq 0.2\%$
$Al \leq 0.1\%$
$B \leq 0.010\%$
and optionally
$Nb \leq 0.060\%$,

the remainder being iron and unavoidable impurities resulting from the production process.

9. Manufacturing method according to claim 1 or 2, **characterised in that** the composition of the steel is that of a martensitic steel, of mechanical strength Rm between 1200 and 1700 MPa.

**10.** Manufacturing method according to claim 9, **characterised in that** the composition of the steel comprises, the contents being expressed by weight:

$0.10\% \le C \le 0.30\%$
$0.40\% \le Mn \le 2.20\%$
$0.18\% \le Si \le 0.30\%$
$0.010\% \le Al \le 0.050\%$
$0.0025\% \le B \le 0.005\%$
and optionally
$0.020\% \le Ti \le 0.035\%$
$Cu \le 0.10\%$
$Ni \le 0.10\%$
$Cr \le 0.21\%$,

the remainder being iron and unavoidable impurities resulting from the production process.

**11.** Manufacturing method according to any one of claims 1 to 10, **characterised in that**, after said welded joint (S1) has been removed and before said welded joint (S2) is created, said at least two intermediately cold-rolled sheets are coiled, temporarily stored and then uncoiled.

**12.** Manufacturing method according to any one of claims 1 to 11, **characterised in that** at least said welded joint (S1) or at least said welded joint (S2) is produced by flash welding.

**13.** Manufacturing method according to any one of claims 1 to 11, **characterised in that** at least said welded joint (S1) or at least said welded joint (S2) is produced by laser.

**14.** Welded then cold-rolled steel sheet of thickness between 0.5 and 3 mm, of which the deformation rate created by the cold-rolling in the base metal is equal to $\varepsilon_{MB}$, of which the deformation rate created by the cold-rolling in the welded joint is equal to $\varepsilon_{S}$, **characterised in that**: $0.4 \le \dfrac{\varepsilon S}{\varepsilon MB} \le 0.7$ and **in that** the general direction of the welded joint extends perpendicularly to the direction of rolling.

**15.** Welded then cold-rolled steel sheet according to claim 14, **characterised in that** the composition of the steel is that of a steel of the dual-phase type of mechanical strength Rm greater than 600 MPa.

**16.** Welded then cold-rolled steel sheet according to claim 15, **characterised in that** the composition of the steel comprises, the contents being expressed by weight:

$0.05\% \le C \le 0.17\%$
$1.1\% \le Mn \le 2.76\%$
$0.07\% \le Si \le 0.7\%$
$S \le 0.008\%$
$P \le 0.030\%$
$0.015\% \le Al \le 0.61\%$
$Mo \le 0.13\%$
$Cr \le 0.55\%$
$Cu < 0.2\%$
$Ni \le 0.2\%$
$Nb \le 0.050\%$
$Ti \le 0.045\%$
$V \le 0.010\%$
$B \le 0.005\%$
$Ca < 0.030\%$
$N \le 0.007\%$,

the remainder of the composition being composed of iron and unavoidable impurities resulting from the production process.

**17.** Welded then cold-rolled steel sheet according to claim 14, **characterised in that** the composition of the steel is that of a steel with high formability, of mechanical strength Rm greater than 690 MPa.

**18.** Welded then cold-rolled steel sheet according to claim 17, **characterised in that** the composition of the steel comprises, the contents being expressed by weight:

$0.13\% \leq C \leq 0.3\%$
$1.8\% \leq Mn \leq 3.5\%$
$0.1\% \leq Si \leq 2\%$
$0.1\% \leq Al \leq 2\%$
it being understood that $1\% \leq Si + Al \leq 2.5\%$
$N \leq 0.010\%$,
and optionally Ni, Cr and Mo, it being understood that $Ni + Cr + Mo < 1\%$,
$Ti \leq 0.1\%$
$Nb \leq 0.1\%$
$V \leq 0.1\%$,

the remainder being iron and unavoidable impurities resulting from the production process.

**19.** Welded then cold-rolled steel sheet according to claim 14, in that the steel is a steel for press-hardening for the manufacture of parts of mechanical strength Rm greater than 1000 MPa.

**20.** Welded then cold-rolled steel sheet according to claim 19, **characterised in that** the composition of the steel comprises, the contents being expressed by weight:

$0.15\% \leq C \leq 0.5\%$
$0.4\% \leq Mn \leq 3\%$
$0.1\% \leq Si \leq 1\%$
$Cr \leq 1\%$
$Ti \leq 0.2\%$
$Al \leq 0.1\%$
$B \leq 0.010\%$
and optionally
$Nb \leq 0.060\%$,

the remainder being iron and unavoidable impurities resulting from the production process.

**21.** Welded then cold-rolled steel sheet according to claim 14, **characterised in that** the composition of the steel is that of a martensitic steel, of mechanical strength Rm between 1200 and 1700 MPa.

**22.** Steel sheet according to claim 21, **characterised in that** the composition of the steel comprises, the contents being expressed by weight:

$0.10\% \leq C \leq 0.30\%$
$0.40\% \leq Mn \leq 2.20\%$
$0.18\% \leq Si \leq 0.30\%$
$0.010\% \leq Al \leq 0.050\%$
$0.0025\% \leq B \leq 0.005\%$
and optionally
$0.020\% \leq Ti \leq 0.035\%$
$Cu \leq 0.10\%$
$Ni \leq 0.10\%$
$Cr \leq 0.21\%$,

the remainder being iron and unavoidable impurities resulting from the production process.

**23.** Steel sheet according to any one of claims 14 to 22, **characterised in that** said welded joint is a flash weld.

**24.** Steel sheet according to any one of claims 14 to 22, **characterised in that** said welded joint is a laser weld.